# EUROPÄISCHE PATENTSCHRIFT

(11) **EP 0 489 808 B1**
(45) Veröffentlichungstag und Bekanntmachung des Hinweises auf die Patenterteilung: **09.11.1994**
(21) Anmeldenummer: 90913139.3
(22) Anmeldetag: 29.08.1990
(51) Int. Cl.: C22B 7/02, C22B 1/24

(54) **TROCKENES VERFAHREN ZUR KALTBRIKETTIERUNG VON HÜTTENSTÄUBEN**
DRY COLD PROCESS FOR MAKING FOUNDRY DUSTS INTO BRIQUETTES
PROCEDE A SEC POUR LE BRIQUETAGE A FROID DE POUSSIERES METALLURGIQUES

(30) Priorität: 30.08.1989 AT 2041/89
(43) Veröffentlichungstag der Anmeldung: 17.06.1992
(73) Patentinhaber: HECKEL, Karl, A-8046 Graz (AT)
(72) Erfinder: HECKEL, Karl, A-8046 Graz (AT)
(74) Vertreter: Pfeifer, Otto, Dipl.-Ing.
(86) Internationale Anmeldenummer: AT9000085
(87) Internationale Veröffentlichungsnummer: WO9103577

(56) Entgegenhaltungen:
- DE-B- 1 135 501
- DE-B- 1 142 442
- DE-B- 1 209 132
- I&SM, April 1981, D.R. Fosnacht: "Recycling of ferrous steel plant fines, state-of-the-art", Seiten 22-26
- International Iron and Steel Institute, Committee on Environmental Affairs, (Brussels), October 1987, "The management of steel industry by-products and waste".

## Beschreibung

In der Hüttenindustrie werden bei zahlreichen metallurgischen Prozessen Hüttenstäube gebildet. So fällt bei der Herstellung von Stahl mittels bekannter Sauerstoffblasverfahren entsprechender Blasstahlstaub an, der über geeignete Filteranlagen gesammelt wird. Der Staub weist einen sehr hohen Metallgehalt auf, wobei je nach Verfahrensweise Eisen in vorwiegend metallischer oder oxidischer Form vorliegt.

Die Verhaldung eines derartigen Staubes stellt ein immer schwierigeres Umwelt- und Kostenproblem dar. Für eine Wiederverwertung des Staubes spricht dessen hoher Metallgehalt, und es fehlte daher auch nicht an Versuchen, diesen Staub in den Prozeß der Stahlherstellung zurückzuführen.

Stäube mit hohem Gehalt an metallischem Eisen und vorallem mit Anteilen an pyrophorem Eisen werden mittels Heißbrikettierverfahren brikettiert und in den Konverter zurückgeführt. Es und auch Methoden des Einblasens von Staub in den Konverter sowie Granulierverfahren unter Zusatz von Bindemitteln bekannt. Bei den letztgenannten Methoden gelangen aber auch Stoffe in den Konverter, die für den metallurgischen Prozeß nicht sehr günstig sind. So beschreibt die US-A 833 630 ein Verfahren zum Brikettieren brüchiger Erze, wobei der Einsatz eines speziellen Kalksteins im Gemisch mit Magnesia und Portlandzement als wesentlich angesehen wird, weil andernfalls keine ausreichende Festigkeit der Erzbriketts erzielt werden kann. Der im Erz enthaltene Wassergehalt von 18 bis 20% ist für die hydraulische Reaktion mit dem Bindemittel Portlandzement von wesentlicher Bedeutung. In diesem bekannten Brikettierverfahren wird die angestrebte Festigkeit der Erzbriketts ausschlieslich durch die Reaktion des Portlandzements erreicht.

Ein ähnliches Verfahren wird in der DE-B 1 142 442 beschrieben. Diese Auslegeschrift hat ein Verfahren zur Brikettierung von Feinerzen zum Gegenstand. Der zum Brikettieren der Feinerze verwendete basische Zuschlagstoff, insbesonders Magnesiumhydrat und/oder Kalkhydrat, stellt ein Bindemittel dar, das mit dem Kohlendioxid aus der Luft zu Carbonat reagiert und solcherart die angestrebte Festigkeit der Erzbriketts sicherstellt.

Auch bei anderen metallurgischen Prozessen, etwa bei der Elektrostahlherstellung oder in der Aluminiumindustrie, fallen Hüttenstäube an, die einer Entsorgung bzw. nach Möglichkeit Rückführung bedürfen.

Die vorliegende Erfindung zielt nun darauf ab, ein neues Verfahren zur Kaltbrikettierung von Hüttenstäuben zur Verfügung zu stellen, das die Nachteile der bisher bekannten Verfahren vermeidet und eine vorteilhafte Wiederverwertung, beispielsweise von Blasstahlstaub im Konverter, ermöglicht.

Gegenstand der vorliegenden Erfindung ist somit ein trockenes Verfahren zur Kaltbrikettierung von Hüttenstäuben, insbesondere von Blasstahlstaub, unter Hochdruck und unter Einsatz eines basischen Zuschlagstoffes, das dadurch gekennzeichnet ist, daß der Staub bei Drücken von über 10.000 bar bei Normaltemperatur (20°C) zusammen mit Kalk, Dolomit, Magnesit, Dunit, Olivin oder Bauxit, jeweils in gebrannter oder ungebrannter Form und jeweils für sich allein oder in Mischungen untereinander, zu transportfähigen, nicht staubenden Briketts verformt wird.

Mit dem erfindungsgemäßen Kaltbrikettierverfahren lassen sich Hüttenstäube, insbesondere Blasstahlstaub, bei Normaltemperatur (20°C) unter Anwendung von hohen Drücken von über 10.000 bar durch den Einsatz von basischen Zuschlagstoffen in transportfähige Briketts überführen. Diese Briketts können in umweltfreundlicher Form dem Stahlgewinnungsprozeß wieder zugeführt werden, unter Ausnutzung der in ihnen enthaltenen Wertstoffe. Das erfindungsgemäße Trockenbrikettierverfahren löst gleichzeitig das mit der Entsorgung des Hüttenstaubes bisher untrennbar verbundene Umweltproblem. Als besonders vorteilhaft erweist sich hiebei, daß bei Ausführung des erfindungsgemäßen Verfahrens keine weitere Belastung der Umwelt durch Schadstoffe aus den Abgasen organischer oder anorganischer Bindemittel eintritt.

Als Zuschlagstoffe im erfindungsgemäßen Brikettierverfahren, die einerseits eine Brikettierung der Hüttenstäube, insbesondere von Blasstahlstaub, erst ermöglichen und andererseits einen positiven Einfluß auf den Frischprozeß ausüben, werden Kalk, Dolomit, Magnesit, Dunit, Olivin, Bauxit, in gebrannter oder ungebrannter Form, jeweils für sich allein oder in Gemischen untereinander, eingesetzt. Eine besonders vorteilhafte Ausführungsform des erfindungsgemäßen Verfahrens zeichnet sich dadurch aus, daß dem Blasstahlstaub 50 Gewichtsteile Kalk je 100 Gewichtsteilen Staub zugesetzt und dieses Gemisch der Kaltbrikettierung mittels Hochdruckpressen unterworfen wird.

Nach einer weiteren vorteilhaften Ausführungsform können dem Blasstahlstaub 40 Gewichtsteile gebrannter Kalk, 5 Gewichtsteile Sinterdunit und 5 Gewichtsteile gebrannter Bauxit je 100 Gewichtsteile Staub zugesetzt werden.

Nur mit dem erfindungsgemäßen Verfahren ist es möglich geworden, die eingangs genannten Probleme in zielführender Weise zu lösen. Wollte man nämlich versuchen, etwa einen Blasstahlstaub auf einer Strangpresse oder Ringwalzenpresse zu Briketts zu verformen, so würden überhaupt keine formhaltenden Körper ausgebildet werden. Blasstahlstaub weist wegen seiner extremen Feinheit (100% kleiner als 20 µm) ein Fließvermögen wie Wasser auf und kann nur unter den extremen Drücken von über 10.000 bar, wie sie das erfindungsgemäße Verfahren zwingend vorsieht, bei Normaltemperatur unter Zusatz spezieller basischer Zuschlagstoffe im trockenen Verfahren zu transportfähigen, nicht staubenden Briketts verpreßt werden.

Das erfindungsgemäße Verfahren wird in den nachfolgenden Beispielen näher erläutert:

### BEISPIEL 1:

500 t Blasstahlstaub aus einem LD-Konverter werden über eine Lurgi-Entstaubungsanlage abgenommen und unter Zusatz von 40 Gewichtsteilen gebranntem Kalk, 5 Gewichtsteilen Sinterdunit und 5 Gewichtsteilen gebranntem Bauxit je 100 Gewichtsteile Blasstahlstaub bei einem Druck von etwa 12.000 bis 15.000 bar in Hochdruckpressen bei Normaltemperatur brikettiert.

Die transportfähigen, nicht staubenden Briketts können mit den üblichen Beschickungsanlagen wieder dem LD-Konverter zugeführt werden.

### BEISPIEL 2:

100 t Staub aus der Aluminiumindustrie werden mit 10 Gewichtsteilen Kalk und 5 Gewichtsteilen Sinterdunit je 100 Gewichtsteilen Staub bei Normaltemperatur unter einem Druck von über 10.000 bar brikettiert. Die stückig gemachten Stäube können in der Hüttenindustrie weiterverwendet werden.

### BEISPIEL 3:

200 t aus einem Elektrostahlwerk erhaltene Stäube werden mit 10 Gewichtsteilen Kalk und 5 Gewichtsteilen Sinterdunit je 100 Gewichtsteile Staub bei Normaltemperatur und unter einem Druck von über 10.000 bar zu Briketts verpreßt. Die erhaltenen transportierbaren Briketts können zum Aufkonzentrieren in den Elektrostahl-Herstellungsprozeß zurückgeführt werden oder einer Verwertung in Buntmetallhütten zugeführt werden.

## Patentansprüche

1. Trockenes Verfahren zur Kaltbrikettierung von Hüttenstäuben, insbesondere von Blasstahlstaub, unter Hochdruck und unter Einsatz eines basischen Zuschlagstoffes, dadurch gekennzeichnet, daß der Staub bei Drücken von über 10.000 bar bei Normaltemperatur (20°C) zusammen mit Kalk, Dolomit, Magnesit, Dunit, Olivin oder Bauxit, jeweils in gebrannter oder ungebrannter Form und jeweils für sich allein oder in Mischungen untereinander, zu transportfähigen, nicht staubenden Briketts verformt wird.

2. Verfahren nach Anspruch 1, dadurch gekennzeichnet, daß Blasstahlstaub mit 50 Gewichtsteilen Kalk je 100 Gewichtsteile Staub zu Briketts verformt wird.

3. Verfahren nach Anspruch 1, dadurch gekennzeichnet, daß Blasstahlstaub mit 40 Gewichtsteilen gebranntem Kalk, 5 Gewichtsteilen Sinterdunit und 5 Gewichtsteilen gebranntem Bauxit je 100 Gewichtsteilen Staub zu Briketts verformt wird.

## Claims

1. Dry process for the cold briquetting of metallurgical dusts, in particular of converter steel dust, at high pressure and using a basic additive, in which the dust is formed into transportable briquettes which do not give off dust, together with lime, dolomite, magnesite, dunite, olivine or bauxite, in each case in burnt or unburnt form, either alone or in mixtures thereof, at pressures in excess of 10.000 bar at standard temperature (20°C).

2. Process according to claim 1, in which converter steel dust is formed into briquettes with 50 parts by mass of lime to 100 parts by mass of dust.

3. Process according to claim 1, in which converter steel dust is formed into briquettes with 40 parts by mass of burnt lime, 5 parts by mass of sintered dunite and 5 parts by mass of burnt bauxite to 100 parts by mass of dust.

## Revendications

1. Procédé à sec pour le briquetage à froid de poussières métallurgiques, en particulier de poussière d'acier à l'oxygène, sous haute pression et avec utilisation d'un granulat basique, caractérisé en ce que la poussière est façonnée en briquettes prêtes à être transportées et ne dégageant pas de poussière, à des pressions supérieures à 10.000 bars pour une température normale (20° C) et avec de la chaux, de la dolomie, de la magnésite, de la dunite, de l'olivine ou de la bauxite, à chaque fois sous forme calcinée ou brute et à chaque fois de façon isolée ou en mélange.

2. Procédé selon la revendication 1, caractérisé en ce que la poussière d'acier à l'oxygène est façonnée en briquettes avec 50 parties de chaux en poids chaque 100 parties de poussière en poids.

3. Procédé selon la revendication 1, caractérisé en ce que la poussière d'acier à l'oxygène est façonnée en briquettes, avec 40 parties de chaux calcinée en poids, 5 parties de dunite frittée en poids et 5 parties de bauxite calcinée en poids chaque 100 parties de poussière en poids.
